# EUROPEAN PATENT APPLICATION

(11) **EP 1 398 697 A2**
(43) Date of publication of application: **17.03.2004**
(21) Application number: 03254255.7
(22) Date of filing: 04.07.2003
(51) Int. Cl.: G06F 9/46

(54) **Extending operating system functionality for an application**

(30) Priority: 05.08.2002 US 212275
(71) Applicant: Hewlett-Packard Development Company, L.P., Houston, Texas 77070 (US)
(72) Inventor: Desoli, Giuseppe, Watertown Massachusetts 02472 (US); Mateev, Nikolay, Acton Massachusetts 01720 (US)
(74) Representative: Jehan, Robert

(57) **Abstract**

Systems and methods for extending operating system functionality for an application (102) are described. One embodiment comprises an interface, which is embodied in a computer-readable medium, between an application (102) and hardware (106). The interface may be adapted for extending operating system functionality for the application (102).

## Description

The present invention relates to a method of and system for extending operating system functionality.

Computer users have always had the desire to extend operating system functionality made available to an application (*e.g.,* to support new protocols, meet new usage patterns, monitor or limit application usage of system resources, sandboxing of applications, *etc.*). Current systems for extending operating system functionality typically fall into one of two main approaches. The first approach is to design a new extensible operating system. This straightforward approach requires modification of the operating system to incorporate the desired functionality. As a result, this approach has very limited application because it requires a new operating system to be configured for each desired functionality. The second approach involves adding extensibility to existing operating systems.

There have been a variety of approaches to adding extensibility to existing operating systems. One existing approach involves making modifications to a new device driver that implements the desired functionality, instead of changing the operating system itself. Another existing approach involves installing a network server, which provides the additional services through an already existing standardized interface. Each of these approaches may be limiting because they require a high degree of user intervention. In addition, the new functionality may not be readily implemented in the context of a device driver or operating system plug-in because those extensions are limited by a pre-defined set of assumptions. Furthermore, these approaches affect each user of the system because the modifications to the operating system are perceived by each user. For example, if there is a bug or security hole in the newly installed software, the integrity of the entire system may be compromised.

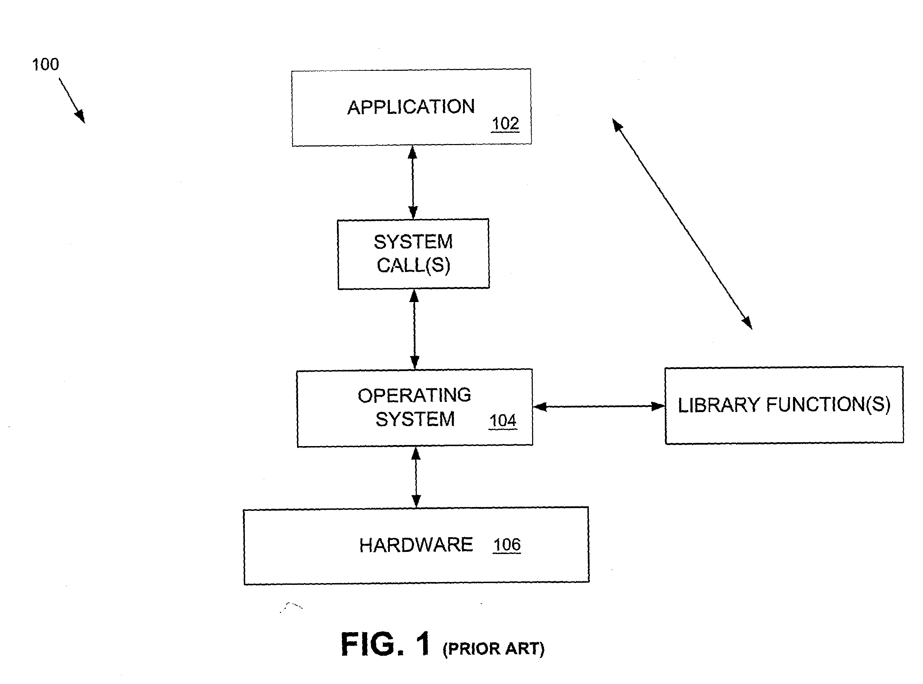

Another common approach for extending operating system functionality involves intercepting system calls using an interposition agent. FIG. 1 is a block diagram of a representative system 100 illustrating an existing computing environment in which an application 102 may invoke an operating system 104 to perform specified operating system functionality on hardware 106. As illustrated in FIG. 1, there are a variety of types of interfaces (*e.g.,* system calls, library functions, *etc.*) commonly found between an application 102 and an operating system 104. As known in the art and previously described, an application 102 (*e.g.,* executable program, *etc.*) generally makes use of functions to carry out specific actions. Functions may include a collection of declarations and/or statements that carry out a specific action and/or return a value. Functions may be defined by the user, or may have been previously defined and made available to the user.

Previously-defined functions that have related functionality *(e.g.,* math or graphics routines, *etc.)* may be stored, for example, in object form in library or archive files. Object code format is a special file format that is generated as an intermediate step when an executable program is produced. Functions stored in library files are often called library functions or run-time library routines.

Some previously defined functions used by programs are actually system calls to the operating system 104. While resembling library functions in format, system calls request the operating system 104 to directly perform some work on behalf of the invoking process associated with application 102. The code that is executed by the operating system 104 may, for example, reside within the kernel *(i.e.,* the central controlling program) of operating system 104. A system call acts as a high/mid-level language interface to this code. To protect the integrity of the kernel, the process executing the system call must temporarily switch from user mode (with user privileges and access permissions) to system mode (with system/root privileges and access permissions). This switch in context carries with it a certain amount of overhead and may, in some cases, make a system call less efficient than a library function that performs the same task. Many library functions (*e.g.,* library functions related to input and output) are fully buffered and thus allow the system some control as to when the specific tasks are actually executed. As illustrated in FIG. 1, executable programs may make use of system calls directly to request the operating system 104 to perform a specific function; or the executable programs may invoke a library function, which in turn may perform system calls.

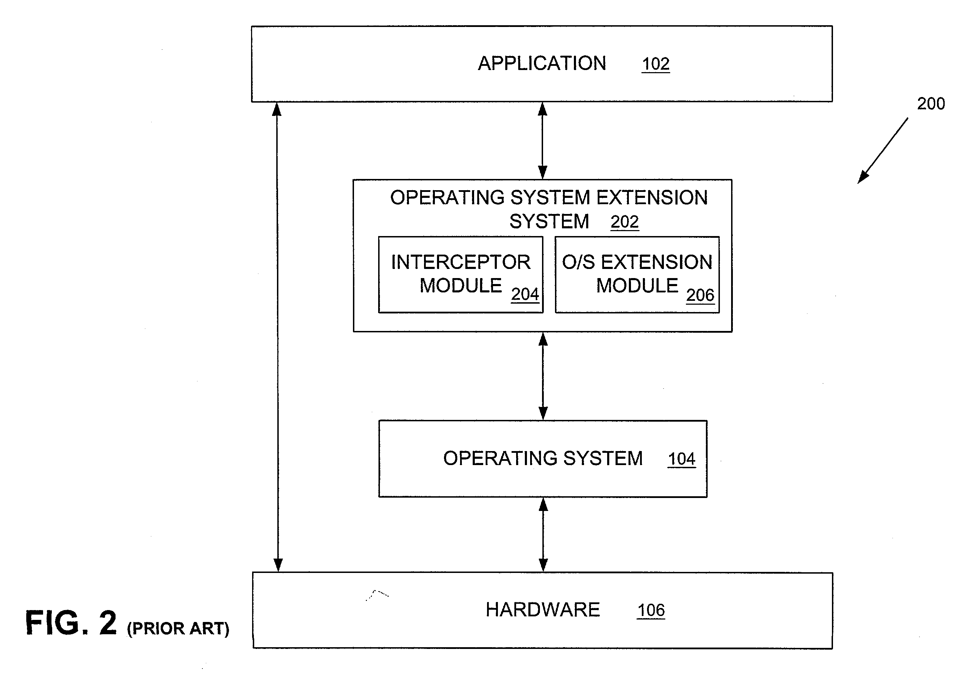

Various examples of using this approach are described and referenced by Alexandrov, Ibel, Schauser, and Scheiman in *"UFO: A Personal Global File System Based on User-Level Extensions to the Operating System,"* ACM Transactions on Computer Systems, Vol. 16, No. 3, August 1998, pp. 207 - 233, which is hereby incorporated by reference in its entirety. FIG. 2 is block diagram illustrating an example of an existing system 200 for extending the functionality of operating system 104 using this approach. As illustrated in FIG. 2, in order to extend the functionality of operating system 104, system 200 includes a system call interposition agent *(e.g.,* operating system extension system 202) inserted between the application 102 and the operating system 104. Typical operating system extension systems 202 consist of an interceptor module 204 and an operating system extension module 206. The interceptor module 204 typically attaches to an application 102 and intercepts selected system calls issued by the application 204. In operation, the interceptor module 204 connects to the user process and tells the operating system 104 which system calls are to be intercepted. For example, whenever a system call of interest (*i.e.,* a system call to be intercepted by interceptor module 202 and extended by O/S extension module 206) begins, operating system 104 is notified by interceptor module 204 to intercept the system call and operating system 104 stops the subject process. Then, operating system 104 communicates with O/S extension module 206 to call the appropriate extension function.

This approach may also be very limiting. For example, the system call interposition agent employed in existing systems is typically implemented using a facility provided by the underlying operating system. As an example, the system described by Alexandrov *et al.* intercepts selected system calls at the user level by using a trace facility (*e.g.,* the /proc file system provided by Unix operating systems and the ptrace process control and debug interface). Using the trace facility provided by the operating system 104, a process may be notified when another process enters or exits selected system calls. While the original motivation for this functionality was debugging and tracing of system calls, existing systems implement this functionality to alter the behaviour of the process, thereby extending the functionality of the operating system 104. Accordingly, these systems are dependent on the particular operating system 104 being employed because an existing operating system facility is required. This approach may not be possible for certain operating systems *(e.g.,* Windows-based operating systems) that do not provide such a facility or provide a similar one in a different and incompatible form.

Furthermore, this approach does not provide a portable solution that may be implemented for multiple applications 102, multiple operating systems 104, multiple operating system extensions, *etc.* For example, the systems characterized in FIG. 2, are based on some specific detail of the particular system being implemented and the details of the interfaces that need to be overloaded. As one example, in the reference cited above, Alexandrov *et al.* describe a system for extending a standard Unix operating system to implement a personalized global file system by using the /proc file system facility provided by the operating system to intercept system calls. Furthermore, these systems do not provide a flexible approach where the control is in one single point, thereby making it easier to intercept multiple different functionalities that could be implemented in very different places in the original system. For example, if the required functionality to intercept/overload is in a dynamic link library (DLL) and another one is in the operating system itself, then an ad hoc solution would be necessarily different in each case. Additionally, in these systems it may be difficult to differentiate the behavior of the system call interposition mechanism for each application, and/or to remove and/or reinsert it at will during the application execution.

These approaches also typically tend to be very slow due to the large overhead associated with extending the operating system functionality. For example, an application that invokes the operating system extension will typically run much slower than desired due to the larger overhead.

The present invention seeks to provide extended operating system functionality.

According to an aspect of the present invention, there is provided a method of extending operating system functionality as specified in claim 1.

According to another aspect of the present invention, there is provided a system for extending operating system functionality as specified in claim 7.

One embodiment of the present invention provides a method extending operating system functionality for an application. Briefly described, one such method comprises the steps of: receiving one or more binary instructions from an application; determining whether the one or more binary instructions correspond to a call to an operating system to perform a particular operating system functionality; determining whether the particular operating system functionality is to be modified for the application; and if the particular operating system functionality is to be modified for the application, executing code to implement the modified functionality.

Another embodiment of the present invention may comprise a system for extending operating system functionality for an application. Briefly described, one such system comprises a means for receiving binary instructions for an application; a means for identifying a call to an operating system to perform a particular operating system functionality; a means for determining whether the particular operating system functionality is to be modified for the application; and a means for implementing the modified functionality.

Another embodiment of the present invention may comprise a system for extending operating system functionality for an application comprising a system call interceptor functionality and a core. The system call interceptor functionality may be configured to: receive binary instructions from an application; determine whether the one or more binary instructions correspond to a call to an operating system to perform a particular operating system functionality; and determine whether the particular operating system functionality is to be modified for the application. The core may be configured to execute and cache code adapted to implement the modified functionality.

In another embodiment of the present invention may comprise interface between an application and hardware for extending operating system functionality for the application. Briefly described, one such interface embodied in a computerreadable medium comprises: logic configured to receive one or more binary instructions from an application; logic configured to determine whether the one or more binary instructions correspond to a call to an operating system to perform a particular operating system functionality; logic configured to determine whether the particular operating system functionality is to be modified for the application; and logic configured to execute code to implement the modified functionality if the particular operating system functionality is to be modified for the application.

Embodiments of the present invention are described below, by way of example only, with reference to the accompanying drawings in which:
FIG. 1 is a block diagram illustrating an environment for implementing an interface between an application and an operating system that supports the application.
FIG. 2 is block diagram illustrating an example of an existing system for extending the functionality of an operating system for an application, which may be implemented in the environment of FIG. 1.
FIG. 3 is a block diagram illustrating an embodiment of a system for extending and/or otherwise modifying operating system functionality for an application.
FIG. 4 is a flow chart illustrating an embodiment of a process for extending and/or otherwise modifying operation system functionality for an application, which may be implemented by the system of FIG. 3.
FIG. 5 is a flow chart illustrating another embodiment of a process for extending and/or otherwise modifying operating system functionality for an application, which may be implemented by the system of FIG. 3.
FIG. 6 is a block diagram illustrating an embodiment of the dynamic execution layer interface (DELI) of FIG. 3.
FIG.7 is a block diagram illustrating an embodiment of the core of the DELI of FIG. 8.
FIG. 8 is a block diagram of an embodiment of a computer system which may implement the systems and methods of FIGS. 3 - 9.
FIG. 9 is a flow chart illustrating a further embodiment of a process for extending and/or otherwise modifying operating system functionality for an application, which may be implemented by the system of FIG. 3.
FIG. 10 is a flow chart illustrating yet another embodiment of a process for extending and/or otherwise modifying operating system functionality for an application, which may be implemented by the system of FIG. 3.

Generally, various systems and methods for extending and/or modifying operating system functionality for an application are described. As described in detail below, an application is enabled to invoke extended and/or modify operating system functionality via a dynamic execution layer interface (DELI). Other example systems are described in European Patent Application EP-A-1,283,465. After the description of the example systems, examples of operation of the systems are provided to explain the manners in which extending and/or modifying operating system functionality for an executing of program binaries can be facilitated.

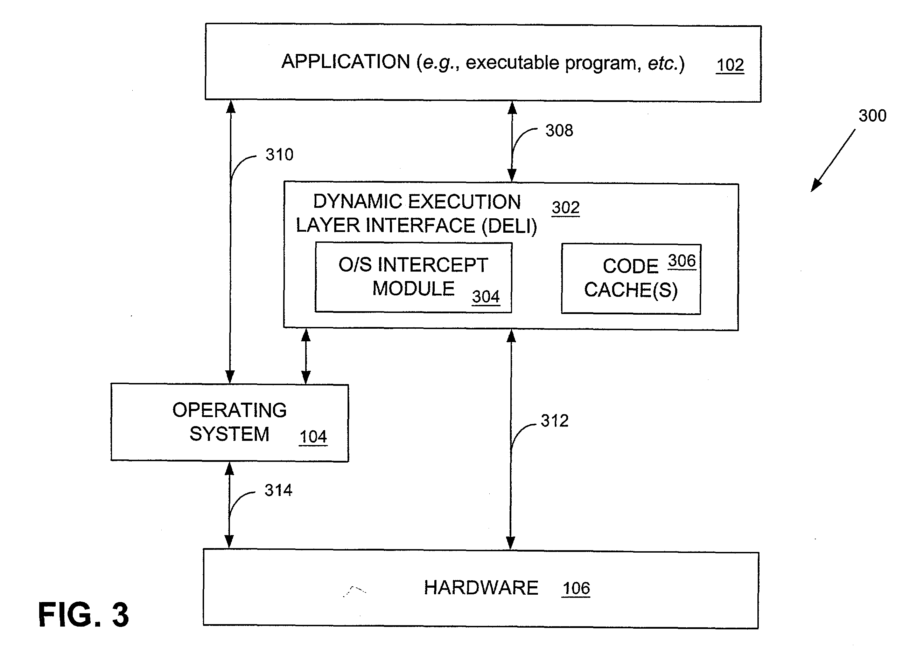

FIG. 3 is a block diagram illustrating an embodiment of a system 300 for extending and/or modifying operating system functionality for an application 102. As illustrated in FIG. 3, system 300 comprises a dynamic execution layer interface (DELI) 302 that resides between one or more applications 102 and hardware 106. One of ordinary skill in the art will appreciate, with reference to the following description, that system 300 leverages the DELI 302 to extend and/or modify functionality associated with one or more operating systems 104. As further illustrated in FIG. 3, application 102 may communicate with DELI 302 via interface 308. DELI 312 may communicate with hardware 106 via interface 312. DELI 302 may comprise an O/S intercept module 304 and one or more code caches 306. In general, O/S intercept module 304 is configured to intercept and/or overload any interface (e.g., interface 310) between application 102 and an underlying operating system or dynamic load libraries (DLLs). O/S intercept module 304 does not necessarily have to be embodied within DELI 302. For example, in other embodiments, O/S intercept module 304 may be located outside of DELI 302. In order to more efficiently extend and/or modify operating system functionality, DELI 302 may store code to implement the modified operating system functionality (instead of the operating system functionality associated with the overloaded/intercepted interface) in code cache(s) 306.

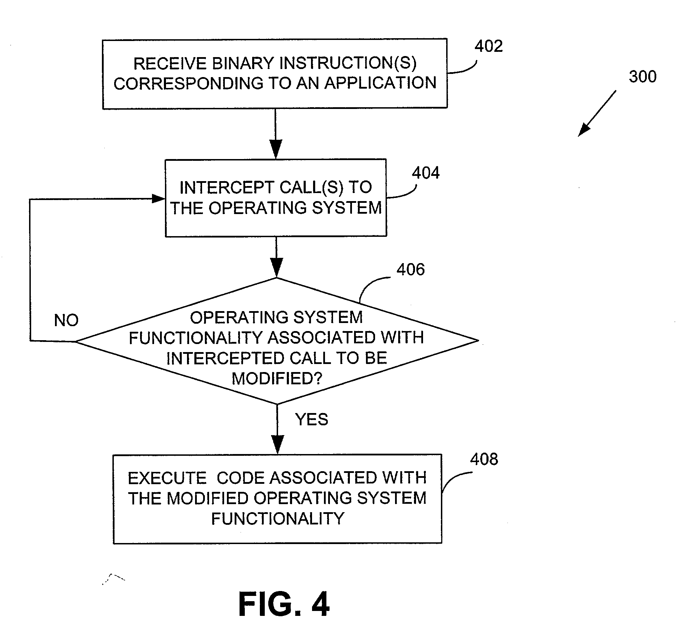

The architecture, operation, and functionality of various embodiments of system 300 will be described in detail below. Nonetheless, by way of introduction, the general architecture, operation, and functionality of system 300 will be briefly described with reference to FIG. 4. At block 402, DELI 302 receives binary instruction(s) corresponding to an application 102. As described below in more detail, DELI 302 may operate in a transparent mode, a nontransparent mode, or combinations of the two modes. Thus, DELI 302 may receive the binary instruction(s), fetch the binary instruction(s), or otherwise gain access to the binary instruction(s) corresponding to the application 102 that is invoking DELI 302. At block 404, operating system intercept module 304 intercepts call(s) to the operating system 104 that are invoked by the binary instruction(s). One of ordinary skill in the art will appreciate that operating system intercept module 304 may be configured to intercept any desirable interface between an application 102 and operating system 104 (*e.g.,* system calls, library functions, *etc.*). One of ordinary skill in the art will further appreciate that the functionality of operating system intercept module 304 may, but need not, be embodied within DELI 302.

At decision block 406, system 300 determines whether the particular operating system functionality being invoked by the call to operating system 104 (block 404) is to be extended or otherwise modified. If the operating system functionality is not to be extended or otherwise modified, then flow returns to block 404, where calls to the operating system 104 may be intercepted. On the other hand, if the operating system functionality being invoked by the binary instruction(s) is to be extended or otherwise modified, system 300 executes code associated with modified operating system functionality (*e.g.,* an operating system extension function, *etc.*) instead of the operating system functionality.

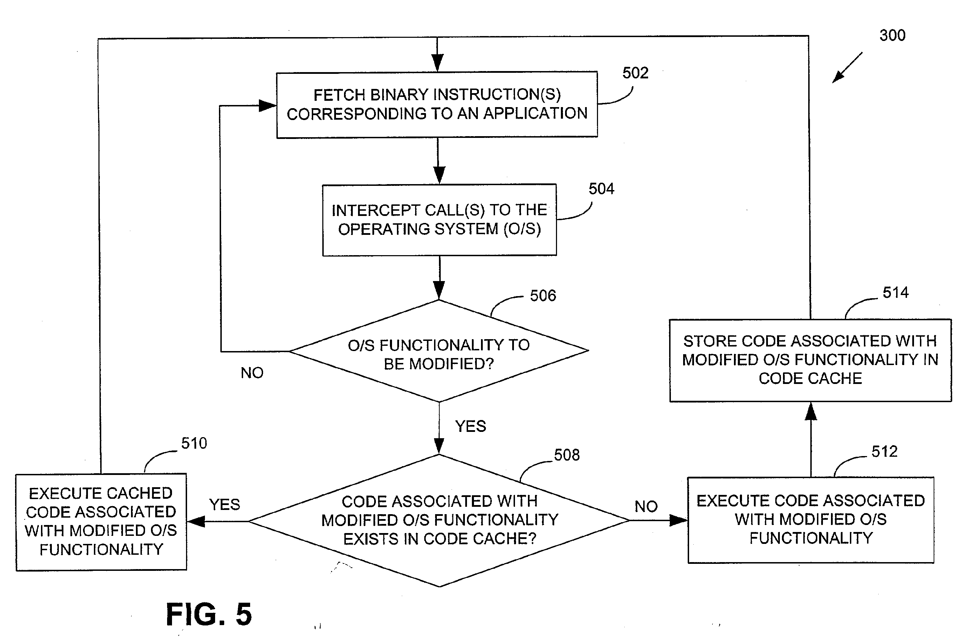

FIG. 5 is a flow chart illustrating another embodiment of a process according to the present invention for extending and/or otherwise modifying operating system functionality for an application 102, which may be implemented by system 300. Referring again to FIG. 3, DELI 302 may comprise one or more code caches 306. One of ordinary skill in the art will appreciate that code caches 306 may be used to minimize the overhead associated with the process of extending or otherwise modifying the operating system functionality. For example, in the operation of system 300, the binary instructions corresponding to the application 102 may frequently invoke a particular call to operating system 104. As discussed above, system 300 may be configured to intercept the particular system call and execute code associated with the modified operating system functionality (*e.g.,* an operating system extension function, *etc.*). In this regard, DELI 302 may be configured to cache, for example, the operating system extension function (or other related code), which is frequently executed, and permanently transform (in the code cache) the original application code to invoke the extension functions, thereby reducing overhead.

Referring again to FIG. 5, at block 502, system 300 fetches binary instruction(s) corresponding to an application 102. At block 504, system 300 intercepts call(s) to the operating system 104 that are invoked by the binary instruction(s). As mentioned above, operating system intercept module 304 may be configured to intercept any desirable interface between an application 102 and operating system 104 (*e.g.,* system calls, library functions, *etc.*). The interception mechanism may be implemented in a variety of ways according to the specific details of the operating system interface. For example, the interception module may be instructed to match a particular pattern of instructions that are used to implement the syscall interface (*e.g.,* INT2A/INT2B x86 instruction used in the Microsoft Windows operating system). One of ordinary skill in the art will further appreciate that the functionality of operating system intercept module 304 may, but need not, be embodied within DELI 302.

At decision block 506, system 300 determines whether the particular operating system functionality being invoked by the call to operating system 104 (block 504) is to be extended or otherwise modified. If the operating system functionality is not to be extended or otherwise modified, then flow returns to block 502. On the other hand, if the operating system functionality being invoked by the binary instruction(s) is to be extended or otherwise modified, system 300 determines, at decision block 508, whether the code associated with the modified operating system functionality (*e.g.,* an operating system extension function, *etc.*) is cached. In a code cache 306 if the code is cached, at block 510, system 300 executes the code from the code cache 306 and flow continues to block 502. If the code associated with the modified operating system functionality is not cached, system 300 may execute the code (at block 512) and store the code in a code cache 306 (at block 514). After the code associated with the modified operating system functionality is executed and stored, flow may continue to block 502.

Referring again to FIG. 3, the DELI 302 comprises a generic software layer written in a high or low level language that resides between application(s) 102, including or not including an operating system (O/S) 104, and hardware 106 to untie application binary code from the hardware 106. Through this arrangement, the DELI 302 can provide dynamic computer program code transformation, caching, and linking services which can be used in a wide variety of different applications such as emulation, dynamic translation and optimization, transparent remote code execution, remapping of computer system functionality for virtualized hardware environments program, code decompression, code decrypting, *etc.* As is discussed in greater detail below, the DELI 302 can provide its services while operating in a transparent mode, a nontransparent mode, or combinations of the two. In the transparent mode, the DELI 302 automatically takes control of an executing program in a manner in which the executing program is unaware that it is not executing directly on computer hardware. In the nontransparent mode, the DELI 302 exports its services through an application programming interface (API) to the application to allow the application to control how the DELI 302 reacts to certain system events.

As depicted in FIG. 3, the DELI 302 resides between at least one application 102 and computer hardware 106. Depending upon the particular arrangement, the application 102 can comprise one or more user applications that are unaware of the DELI's presence and/or a client (*e.g.,* emulator) that is aware of the DELI 302 and which is configured to utilize the DELI's services. More generally, however, the application 102 comprises any type of program code containing instructions to be executed by a computer processor. Where an O/S is used, the DELI 302 may reside either above or below the O/S depending upon the nature of the services that are provided. For example, when the DELI 302 operates above the O/S, it can only control execution of applications. If the DELI 302 operates below the O/S, however, the DELI has access to an instruction stream which can include a mix of system and user code both from the O/S 104 and applicatiori(s 102. The hardware 106 can comprise various different computer system components but typically at least comprises a computer processor.

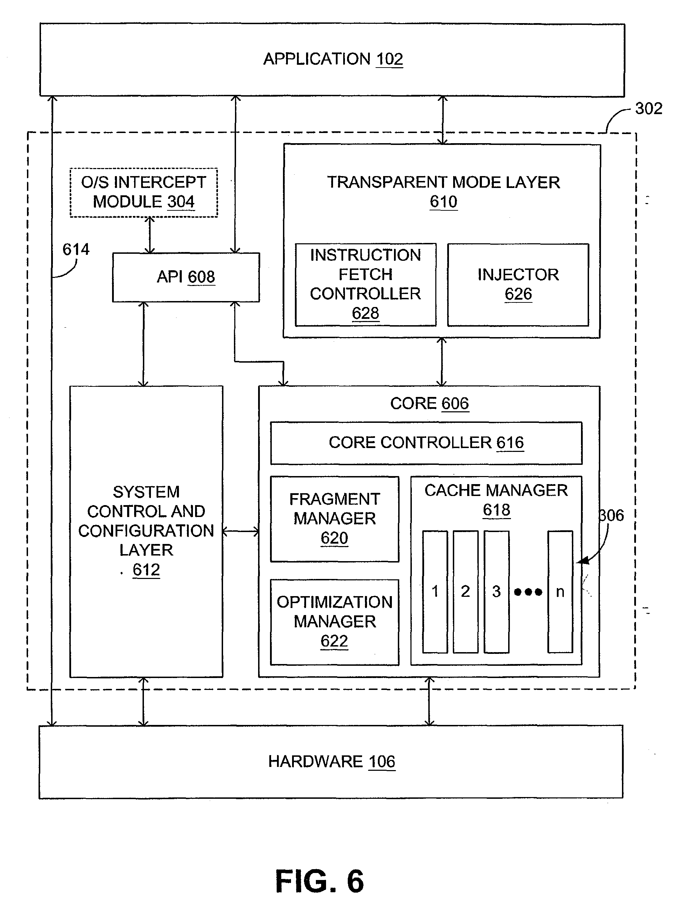

Referring to FIG. 6, DELI 302 can include four main components including a core 606, an application programming interface (API) 608, a transparent mode layer 610, and a system control and configuration layer 612. As stated above, in some embodiments DELI 302 may comprise O/S intercept module 304. Generally speaking, the core 606 exports two main services to both the API 608 and the transparent mode layer 610. The first of these services pertains to the caching and linking of native code fragments or code fragments which correspond to the instruction set of the hardware 106. The second pertains to executing previously cached code fragments. The API 608 exports functions from the application 102 that provide access to the caching and linking services of the core 606 in the nontransparent mode of operation. The transparent mode layer 610 enables the core 606 to gain control transparently over code execution in the transparent mode of operation as well as fetch code fragments to be cached. Finally, the system control and configuration layer 612 enables configuration of the DELI 302 by providing policies for operation of the core 606 including, for example, policies for the caching, linking, and optimizing of code. These policies can, for example, be provided to the layer 612 from the application 102 via the API 608. The system control and configuration layer 612 also controls whether the transparent mode of the DELI 302 is enabled, thus determining whether the core 606 receives input from the API 608, the transparent mode layer 610, or both.

System 300 can include a bypass path that can be used by the application 102 to bypass the DELI 302 so that the application can execute directly on the hardware 108, where desired. It is noted that such operation can be possible in that the DELI 302 is an optional execution layer which may or may not be utilized.

As is shown in FIG. 6, the core 606 comprises a core controller 616, a cache manager 618, a fragment manager 620, and an optimization manager 622. The core controller 616 functions as a dispatcher that assigns tasks to the other components of the core 606 that are responsible for completing the tasks. The cache manager 618 comprises a mechanism (*e.g.,* set of algorithms) that controls the caching of the code fragments within one or more code caches 306 (*e.g.,* caches 1 through n) according to the policies specified by the system control and configuration layer 612 as well as the fragment manager 620 and the optimization manager 622. The one or more code caches 306 of the core 606 can, for instance, be located in hardware caches on one or more processors of the hardware 106, or can be created in the main local memory of the hardware. Where the code cache(s) 306 is/are mapped in hardware caches onboard the processor(s), greatly increased performance can be obtained due to reduced instruction cache refill overhead, increased memory bandwidth, *etc.* The fragment manager 620 specifies the arrangement of the code fragments within the code cache(s) 306 and the type of transformation that is imposed upon the fragments. Finally the optimization manager 622 contains the set of optimizations that can be applied to the code fragments to optimize their execution.

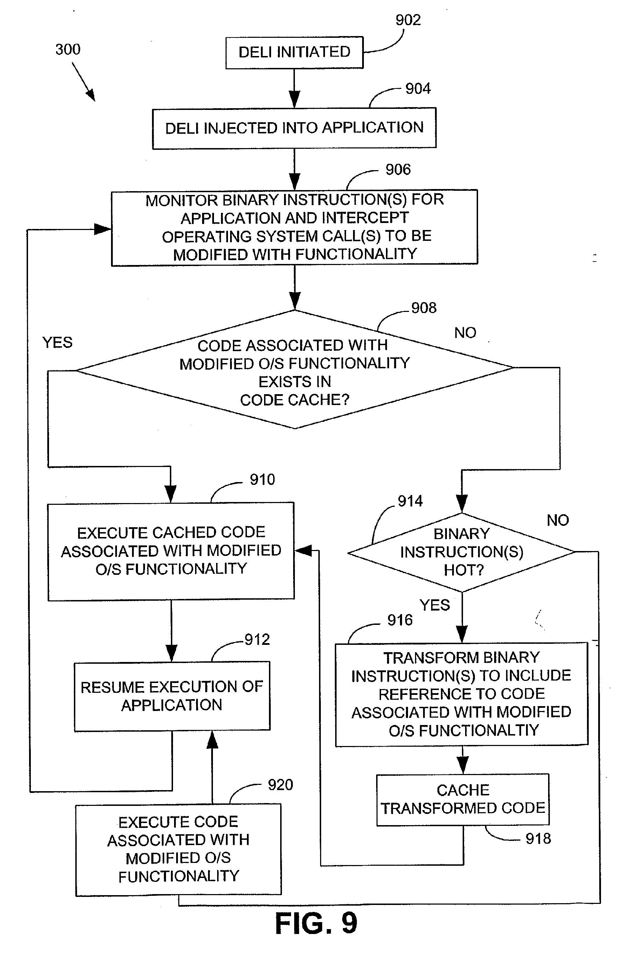

As noted above, the API 608 exports functions from the application 102 that provide access to DELI services. More specifically, the API 608 exports caching and linking services of the core 606 to the application 102, which typically comprises a client that is aware of the DELI's presence. These services exported by the API 608 enable the application 102 to control the operation of the DELI 302 in the nontransparent mode by (i) explicitly emitting code fragments to the core 606 for caching and/or by (ii) instructing the DELI 302 to execute specific code fragments out of its code cache(s) 306. In addition, the API 608 also can export functions that initialize and discontinue operation of the DELI 302. For instance, the API 608 can initiate transparent operation of the DELI 302 and further indicate when the DELI is to cease such operation. The API 608 also, as mentioned above, facilitates configuration of the DELI 302 by delivering policies specified by the application 102 to the core 606 (*e.g.,* to the fragment manager 620 and/or the optimization manager 622). Use of the API 608 in facilitating operation in a nontransparent mode is described below in relation to FIG. 9.

With further reference to FIG. 6, the transparent mode layer 610 typically includes an injector 626 which is used to gain control over a running application 102 transparently. When the DELI 302 operates in a completely transparent mode *(i.e.,* where the application is unaware of the DELI's presence) the injector 626 is used to inject the DELI into the application 102 before the application begins execution so that the application can be run under DELI control. In such circumstances, the DELI 302 avoids modifying the application's 102 executable image to avoid impeding exception handling. Control can be gained by the injector 626 in several different ways, each of which loads the application binaries without changing the virtual address at which the binaries are loaded. By way of example, the O/S kernel loader can be modified such that the DELI 302 *(e.g.,* compiled as a shared library) is automatically loaded by the kernel loader when it loads the application's executable image. Alternatively, a user level loader can be used to leverage the kernel loader without modifying it to load the application 102 in memory in suspended mode and later inject instructions into the application *(e.g.,* on the application stack) that will load the DELI 302 shared library later when the application is resumed.

In another alternative, *ptrace* can be used to attach the DELI 302 to the application 102. As is known in the art, *ptrace* is a mechanism often used by debuggers that allows one process to control another. The DELI 30 can be configured as a separate process that attaches to the application 102 via *ptrace,* and runs the application until the point where the execution start-up code at the top of the application's binary image *(e.g., crt0)* is about to call the application's entry point. Execution of the application 102 can then be suspended, and the DELI 302 can be used to fetch the application instructions and execute them on its behalf.

In yet another alternative, the application's text segment can be expanded in a separate copy of the executable file. In particular, the application's binary image can be copied to a temporary location, the application's text segment extended by adding a DELI text segment at the end, and the start symbol *(i.e.,* the entry point that is called by *crt0)* changed to the DELI entry point. The resulting executable file can then be executed using *exec.* The original application's text segment is still loaded at the same virtual address that it would normally have, but the DELI 302 will gain control before the actual application 102 starts.

In another example, the DELI 302 can gain control over the application 102 using a special version of *crt0.* As is known in the art, the *crt0* code is responsible for picking-up the command line arguments, setting up the initial stack and data segment, and then making a call to the value of the start symbol (usually the main( ) function of the application 102). Prior to calling the application 102 entry point, *crt0* maps the dynamic link loader *dld,* which then loads any dynamically linked libraries (DLLs) referenced by the application 102. A custom version of *crt0* can be used to additionally map the DELI code (itself compiled as a DLL), and call the DELI's entry point instead of the one defined by the start symbol.

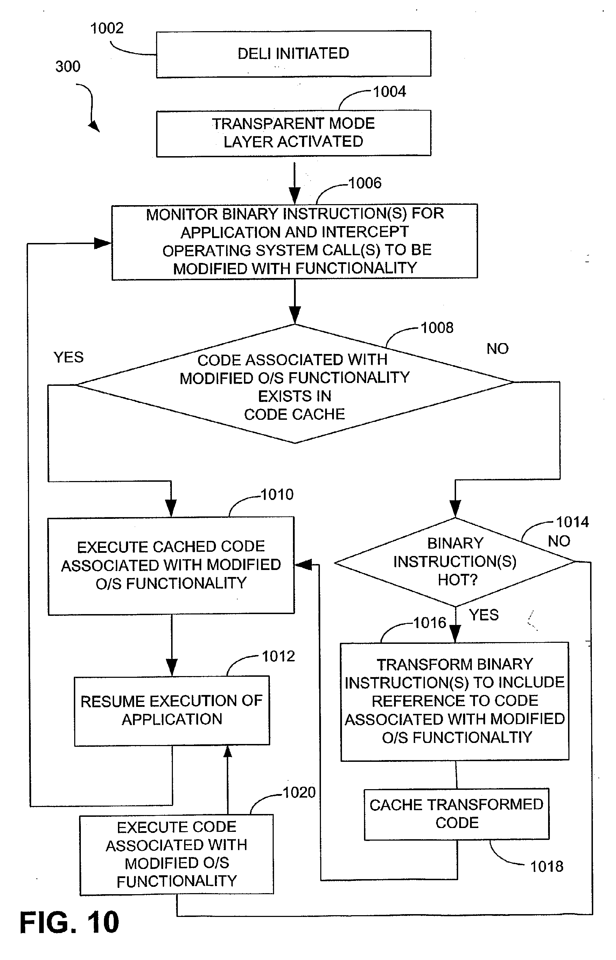

Irrespective of the manner in which control is obtained over the application 102, an instruction fetch controller 628 can then be used to extract *(i.e.,* fetch) copies of fragments *(e.g.,* traces) of the application binary code, pass them to the DELI core 606 for caching, and direct the core 606 to execute the appropriate cached copies out of its code cache(s) 306. Use of the transparent mode layer 610 in facilitating such operation is described below in relation to FIG. 10.

It is to be noted that, although the DELI 302 has been shown and described herein as including the transparent mode layer 610, persons having ordinary skill in the art will appreciate from this disclosure taken as a whole that this layer may be omitted altogether where operation of the DELI is solely controlled by the application 102 *(i.e.,* client) via the API 608.

As noted above, the system control and configuration layer 612 enables configuration of the DELI 302 by providing policies for the caching and linking of code. Although the DELI 302 is not limited to any particular type of policy or policy content, the policies typically determine how the DELI will behave. For instance, the layer 612 may provide policies as to how fragments of code are extracted from the application 102, how fragments are created from the original code, how multiple code fragments can be linked together to form larger code fragments, *etc.* The layer's policies can be static or dynamic. In the former case, the policies can be hardcoded into the DELI 302, fixing the configuration at build time. In the latter case, the policies can be dynamically provided by the application 102 through function calls in the API 608. Implementation of the policies controls the manner in which the DELI 302 reacts to specific system and/or hardware events *(e.g.,* exceptions and interrupts). In addition to the policies noted above, the system control and configuration layer 612 can specify the size of the code cache(s) 306, whether a log file is created, whether code fragments should be optimized, *etc.*

The system control and configuration layer 612 further supports the abstraction of system and hardware functionality by intercepting instructions in the application binary code directed at system and hardware functionality. These instructions are then replaced by the fragment manager 620 under the direction of the system control and configuration layer 612 as part of the fragment formation process.

The system control and configuration layer 612 identifies instructions directed at missing or defective hardware and causes the fragment manager 620 to replace them with corresponding instructions directed at similar, but different, hardware 106 or with software simulations of the original hardware.

As described above, DELI 302 may include O/S intercept module 302, O/S intercept module 304. One of ordinary skill in the art will appreciate that operating system intercept module 304 may be configured to intercept any desirable interface between an application 102 and operating system 104 *(e.g.,* system calls, library functions, *etc.).*

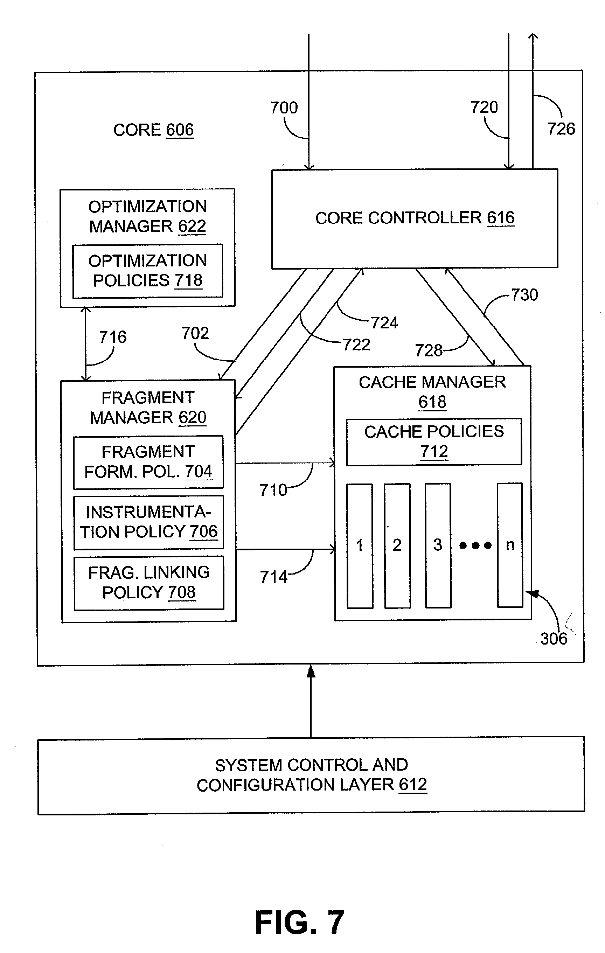

FIG. 7 illustrates an example configuration of the core 606 and its operation. As indicated in this figure, the core 606 accepts two types of requests from the API 608 or the transparent mode layer 610. First, requests 700 can be accepted for caching and linking a code fragment through a function interface. Such a request can comprise a function in the form of, for instance, "DELI_emit_fragment(tag, fragbuf)". This function receives a code fragment as its parameters and an identifier *(e.g.,* tag) to store in the DELI cache(s) 306. In addition, the core 606 accepts requests for initiating execution at a specific code fragment tag through a function interface such as "DELI_execute_fragment(tag)", which identifies a code fragment stored in the cache(s) 306 to pass to the hardware 108 for execution.

The core controller 616 processes these requests and dispatches them to the appropriate core module. A request 702 to emit a code fragment with a given identifier can then be passed to the fragment manager 620. The fragment manager 620 transforms the code fragment according to its fragment formation policy 704, possibly instruments the code fragment according to its instrumentation policy 706, and links the code fragment together with previously cached fragments according to its fragment linking policy 708. For example, the fragment manager 620 may link multiple code fragments in the cache(s) 306, so that execution jumps to another code fragment at the end of executing a code fragment, thereby increasing the length of execution from the cache(s). To accomplish this, the fragment manager 620 issues fragment allocation instructions 710 to the cache manager 618. The fragment manager 620 then sends a request to the cache manager 618 to allocate the processed code fragment in the code cache(s) 306.

The cache manager 618 controls the allocation of the code fragments and typically is equipped with its own cache policies 712 for managing the cache space. However, the fragment manager 620 may also issue specific fragment deallocation instructions 714 to the cache manager 618. For example, the fragment manager 620 may decide to integrate the current fragment with a previously allocated fragment, in which case the previous fragment may need to be deallocated. In some arrangements, the cache manager 618 and fragment manager 620 can manage the code cache(s) 306 and code fragments in the manner shown and described in U.S. Patent No. 6,237,065, issued May 108, 2001, entitled "A Preemptive Replacement Strategy for a Caching Dynamic Translator Based on Changes in the Translation Rate". Alternatively, management of the code cache(s) 306 and code fragments may be performed in the manner shown and described in U.S. Patent Application Serial No. 09/755,389, filed January 5, 2001, entitled "A Partitioned Code Cache Organization to Exploit Program Locality".

Prior to passing a fragment to the cache manager 618, the fragment manager 620 may pass (716) the fragment to the optimization manager 622 to improve the quality of the code fragment according to its optimization policies 718. In some arrangements, the optimization manager 622 may optimize code fragments in the manner shown and described in U.S. Patent Application Serial No. 09/755,381, filed January 5, 2001, entitled "A Fast Runtime Scheme for Removing Dead Code Across Linked Fragments". Alternatively, the optimization manager 122 may optimize code fragments in the manner shown and described in U.S. Patent Application Serial No. 09/755,774, filed January 5, 2001, entitled "A Memory Disambiguation Scheme for Partially Redundant Load Removal". Notably, the optimization manager 622 may also optimize code fragments using classical compiler optimization techniques, such as elimination of redundant computations, elimination of redundant memory accesses, inlining functions to remove procedure call/return overhead, *etc.*

As mentioned above, the fragment manager 620 transforms the code fragment according to its fragment formation policy 704. The transformations performed by the fragment manager 620 can include code relocation by, for instance, changing memory address references by modifying relative addresses, branch addresses, *etc.* The layout of code fragments may also be modified, changing the physical layout of the code without changing its functionality *(i.e.,* semantic). These transformations are performed by the fragment manager 620 on fragments received through the API 608 and from the instruction fetch controller 628.

To perform code instrumentation, the fragment manager 620 gathers data according to the instrumentation policy 706 for code profiling, such as data on the frequency of execution of code fragments, the frequency with which a memory address is accessed, *etc.* Program counters can be used to collect these statistics in order to facilitate fragment formation or deallocation. These policies are configured by the system control and configuration layer 612, which receives policy instructions sent either through the API 608 or established at DELI build time. The policies may comprise options for different ways to create, instrument, optimize, and link fragments, or the policies may simply be hardcoded algorithms in the DELI 302 for performing these tasks.

The second type of request accepted by the DELI core 606 is a request 720 to execute a fragment identified by a given identifier *(e.g.,* tag). In such a case, the core controller 616 issues a lookup request 722 to the fragment manager 620, which returns a corresponding code cache address 724 if the fragment is currently resident and active in the cache(s) 306. By way of example, the fragment manager 620 can maintain a lookup table of resident and active code fragments in which a tag can be used to identify the location of a code fragment. Alternatively, the fragment manager 620 or cache manager 618 can use any other suitable technique for tracking whether code fragments are resident and active. If the fragment is not currently resident and active in the cache(s) 306, the fragment manager 620 returns an error code to the core controller 616, which returns (726) the fragment tag back to the initial requester as a cache miss address. If, on the other hand, the fragment is currently resident and active, the core controller 616 then patches (728) the initial request to the cache manager 618 along with its cache address. The cache manager 618, in turn, transfers control to the addressed code fragment in its code cache(s) 306, thus executing the addressed code fragment. Execution then remains focused in the code cache(s) 306 until a cache miss occurs, *i.e.,* until a copy for the next application address to be executed is not currently resident in the cache(s). This condition can be detected, for instance, by an attempt of the code being executed to escape from the code cache(s) 306. A cache miss is reported (730) from the cache manager 618 to the core controller 616 and, in turn, back (726) to the initial requester.

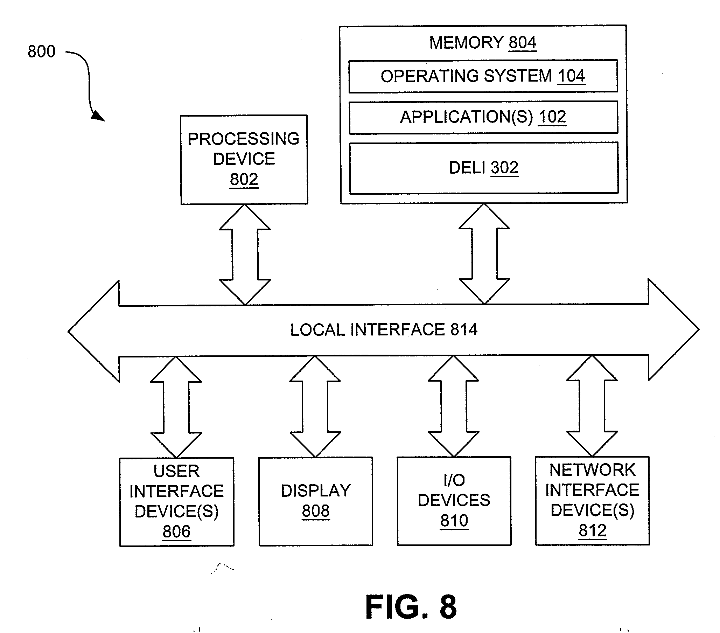

FIG. 8 is a schematic view illustrating an example architecture for a computer system 800 on which system 300 (FIG. 3) can execute. Generally speaking, the computer system 800 can comprise any one of a wide variety of wired and/or wireless computing devices, such as a desktop computer, portable computer, dedicated server computer, multi-processor computing device, cellular telephone, personal digital assistant (PDA), handheld or pen-based computer, and so forth. Irrespective of its specific arrangement, the computer system 800 can, for instance, comprise a processing device 802, memory 804, one or more user interface devices 806, a display 808, one or more input/output (I/O) devices 810, and one or more networking devices 812, each of which is connected to a local interface 814.

The processing device 802 can include any custom made or commercially available processor, a central processing unit (CPU) or an auxiliary processor among several processors associated with the computer system 800, a semiconductor based microprocessor (in the form of a microchip), a macroprocessor, one or more application-specific integrated circuits (ASICs), a plurality of suitably configured digital logic gates, and other well known electrical configurations comprising discrete elements both individually and in various combinations to coordinate the overall operation of the computing system.

The memory 804 can include any one of a combination of volatile memory elements *(e.g.,* random access memory (RAM, such as DRAM, SRAM, *etc.*)) and nonvolatile memory elements *(e.g.,* ROM, hard drive, tape, CDROM, *etc.).* The memory 804 typically comprises an O/S 104, one or more applications 102 *(e.g.,* user application and/or client), and the DELI 302, which has already been described in detail. Persons having ordinary skill in the art will appreciate that the memory 804 can, and typically will, comprise other components which have been omitted for purposes of brevity.

The one or more user interface devices 806 comprise those components with which the user can interact with the computing system 800. For example, where the computing system 800 comprises a personal computer (PC), these components can comprise a keyboard and mouse. Where the computing system 800 comprises a handheld device *(e.g.,* PDA, mobile telephone), these components can comprise function keys or buttons, a touch-sensitive screen, a stylus, *etc.* The display 808 can comprise a computer monitor or plasma screen for a PC or a liquid crystal display (LCD) for a handheld device.

With further reference to FIG. 8, the one or more I/O devices 810 are adapted to facilitate connection of the computing system 800 to another system and/or device and may therefore include one or more serial, parallel, small computer system interface (SCSI), universal serial bus (USB), IEEE 1394 *(e.g.,* Firewire^{TM}), and/or personal area network (PAN) components. The network interface devices 812 comprise the various components used to transmit and/or receive data over a network. By way of example, the network interface devices 812 include a device that can communicate both inputs and outputs, for instance, a modulator/demodulator *(e.g.,* modem), wireless *(e.g.,* radio frequency (RF)) transceiver, a telephonic interface, a bridge, a router, network card, *etc.*

Various software and/or firmware has been described herein. It is to be understood that this software and/or firmware can be stored on any computer-readable medium for use by or in connection with any computer-related system or method. In the context of this document, a computer-readable medium denotes an electronic, magnetic, optical, or other physical device or means that can contain or store a computer program for use by or in connection with a computer-related system or method. These programs can be embodied in any computer-readable medium for use by or in connection with an instruction execution system, apparatus, or device, such as a computer-based system, processor-containing system, or other system that can fetch the instructions from the instruction execution system, apparatus, or device and execute the instructions. In the context of this document, a "computer-readable medium" can be any means that can store, communicate, propagate, or transport the program for use by or in connection with the instruction execution system, apparatus, or device.

The computer-readable medium can be, for example but not limited to, an electronic, magnetic, optical, electromagnetic, infrared, or semiconductor system, apparatus, device, or propagation medium. More specific examples (a nonexhaustive list) of the computer-readable medium include an electrical connection having one or more wires, a portable computer diskette, a random access memory (RAM), a read-only memory (ROM), an erasable programmable read-only memory (EPROM, EEPROM, or Flash memory), an optical fiber, and a portable compact disc read-only memory (CDROM). Note that the computer-readable medium can even be paper or another suitable medium upon which a program is printed, as the program can be electronically captured, via for instance optical scanning of the paper or other medium, then compiled, interpreted or otherwise processed in a suitable manner if necessary, and then stored in a computer memory.

The general nature of the DELI 302 having been described above, examples of operation of the DELI will now be discussed with reference to FIGS. 9 and 10. As identified above, the DELI 302 operates in two general operating modes, *i.e.,* a transparent mode and a nontransparent mode, as well as combinations thereof. In describing operation in these modes, flow diagrams are provided. It is to be understood that any process steps or blocks in these flow diagrams represent modules, segments, or portions of code that include one or more executable instructions for implementing specific logical functions or steps in the process. It will be appreciated that, although particular example process steps are described, alternative implementations are feasible. Moreover, steps may be executed out of order from that shown or discussed, including substantially concurrently or in reverse order, depending on the functionality involved.

Generally speaking, irrespective of whether the DELI 302 has gained control over the execution of the application 102 transparently or nontransparently, the application does not execute directly on the hardware 106. Rather, application code executes through the DELI 302 in the form of code fragment that may be maintained in the code cache(s) 306.

FIG. 9 illustrates a simple example of DELI operation in the transparent mode. More particularly, FIG. 9 illustrates DELI operation in a completely transparent mode in which the application 102 is unaware of the DELI's presence. Beginning with block 902, the DELI 302 is first initiated. When operating in the transparent mode, this initiation can result from initiation of the application 102. Upon its initiation, the DELI 302 is injected into the application 102 with the injector 626 of the transparent mode layer 610, as indicated in block 904, such that the DELI gains control over the application and its execution. As noted above, there are various different methods in which this control can be gained.

Once the DELI 302 has control over the application 102, the DELI can be used to provide any one of several different services such as those noted above. For instance, the DELI 302 can facilitate hardware and/or software emulation, dynamic translation and optimization, transparent remote code execution, remapping of computer system functionality for virtualized hardware environments program, code decompression, code decryption, *etc.* These different services each involve the caching and the linking of program code fragments within the code cache(s) 306. By caching certain fragments of code copied from the application binaries and transforming them in some manner, the desired services can be provided by later executing the transformed code from the code cache(s) 306.

Before caching code, the DELI 302 must determine which particular fragments of code to cache. In that, when operating in the completely transparent mode, the application 102 is unaware of the DELI 100, the DELI does not receive guidance from the application as to which code fragments to cache. Although the caching of code can be dictated through the policies created at the DELI build time, more preferably, the DELI 302 has the capability to, at least in part, make these determinations on its own. The DELI 302 can do this by monitoring the execution of code by the application 102, as indicated in block 906. In so doing, the DELI 302 can collect information as to, for instance, which code fragments are most useful to the application 102 by, for example, determining which fragments are most frequently used.

As the various code fragments are executed by the application 102 under the control of the DELI 100, the DELI "sees" each piece of code that is executed. Through the monitoring process, the DELI 100 can, therefore, determine which code fragments are used most frequently. The DELI 100 can then make the determination of which pieces of code are "hot," *i.e.,* most important to application execution with reference to the policies that are provided by the system control and configuration layer 112. As noted above, this determination can be made using program counters that track execution instances. Persons having ordinary skill in the art will appreciate that various other methods can be used to make the determination of which pieces of code are hot. Examples of the manner in which this determination can be made are described in U.S. Patent Application Serial No. 09/186,945, filed November 5, 1998, entitled "Method for Selecting Active Code Traces for Translation in a Caching Dynamic Translator," and U.S. Patent Application Serial No. 09/312,296, filed May 14, 1999, entitled "Low Overhead Speculative Selection of Hot Traces in a Caching Dynamic Translator".

With further reference to FIG. 4, as each code fragment is executed, the DELI 100 can determine whether an associated code fragment has previously been cached, as indicated in decision element 406. If so, the DELI 100 jumps to the code cache(s) 124 that contains the cached (and typically transformed) code and this code is executed by the hardware 104 in lieu of the original application code, as indicated in block 408. The determination of whether the code has been cached can be made with reference to, as noted above, identifiers *(e.g.,* tags) that identify the association between native application code and analogues that have been cached within the code cache(s) 124. Execution of the cached code then continues, including the execution of linked fragments of code that reside in the code cache(s) 124, until such time when a reference to code that has not been cached *(i.e.,* a cache miss) is encountered. With reference to decision element 410, if a reference to uncached code is encountered, the DELI 100 jumps back to the application code and the execution of that code is resumed, as indicated in block 412. At this time, the DELI 100 can resume monitoring of this execution (block 404).

Returning to decision element 406, if the DELI 100 determines that an associated code fragment does not reside in the code cache(s) 124, flow continues to decision element 414 at which it is determined whether the code fragment is hot with reference to a predetermined policy. If the code is not hot, flow returns to block 404 at which monitoring of the application code execution continues. If, on the other hand, the code is hot, the code fragment is copied, as indicated in block 416, by fetching the fragment using the instruction fetch controller 128 of the transparent mode layer 110.

At this point, the code fragment can be transformed in some manner, as indicated in block 418. In addition, code fragments within the cache(s) 124 can be linked according to the policies that have been established for code linking. The nature of the code transformation depends upon the type of services that the DELI 100 is to provide. For example, where the DELI 100 is to merely optimize the application execution, this transformation can comprise rearranging and/or reconfiguring the code for better performance. Irrespective of the nature of the transformation provided, the code structure is modified in a way without modifying the underlying semantic. Once the code fragment has been transformed, the transformed code can be cached within the code cache(s) 124, as indicated in block 420, and executed within the DELI 100 with flow continuing to block 408 described above.

As noted above, the DELI 100 operates differently in the nontransparent mode. Generally speaking, when operating in the nontransparent mode, the DELI 100 may operate, for example, as a DLL or a statically linked module which exports functions in the API 108 that the application 102 can access. In the nontransparent mode, the application 102 *(i.e.,* a client) is aware of the DELI 100 and is configured to utilize the DELI's services. In the simplest case, the client *(e.g.,* emulator) controls every aspect of DELI operation through the API 108. In such a case, the DELI 100 can be utilized to cache, link, and optimize code according to explicit instructions provided by the client via the API 108. For instance, the DELI 100 can be instructed to cache certain code fragments believed to be most frequently used during application execution. This can be accomplished by, for instance, providing the location of the code to the DELI 100 by identifying a tag. In such a case, the DELI 100 does not monitor but instead records code fragments as commanded by the API 108. In addition, the client can instruct the DELI 100 as to which cached fragments to execute via the API 108 by identifying the applicable tags to the DELI.

In a more typical scenario, however, the client calls upon the DELI 100 to provide its services in a transparent manner. In such a case, the client invokes operation of the DELI 100, as well as provides instructions as to when the DELI is to halt its operation. FIG. 5 provides an example of operation in this manner.

Beginning with block 500, DELI 100 is initiated. In the nontransparent mode, this initiation occurs when a start command such as "DELI_START" is delivered by the API 108 that invokes the DELI 100. Once initiated, the transparent mode layer 110 can be activated, as indicated in block 502, and flow can continue in similar manner to the transparent mode described above in relation to FIG. 4. Accordingly, the DELI 100 can monitor the execution of code by the application (client) (504), determine whether a code fragment has been previously cached (506), execute cached code where applicable (508), copy hot code fragments (516), transform the copied code fragments (518), and cache transformed code fragments (520). Operation of the DELI 100 continues in this manner until the DELI encounters a condition which, as required by the client, causes the DELI to halt operation. By way of example, this interruption can be effected with a "DELI_STOP" command placed at the end of a function call sent to the DELI 100 via the API 108.

As noted above, the DELI 100 can be used to facilitate decoding of program binaries. For example, the DELI 100 can be used to decompress and execute compressed program code. As described above, there are several problems with current decompression/execution solutions including, for example, decreased system performance and the need for relatively large amounts of memory. These problems can be avoided, however, when the DELI 100 is used in that the DELI controls very small portions of code such as code fragments and even individual instructions. In operation, the DELI 100 can be used to decompress code fragments as well as cache the most frequently used code fragments in decompressed form within the code cache(s) 124. With such operation, smaller portions of the application code are decompressed, thereby reducing decompression overhead and requiring less of the available system memory. Moreover, in that the most frequently used code fragments are cached in decompressed form, much less dynamic decompression is needed, thereby improving performance.

One example of operation of the DELI 100 in providing decoding and executing of application binaries is shown in FIG. 6. In this example, the decoding services are provided in the transparent mode of operation. Although the decoding is described in terms of decompression, persons having ordinary skill in the art will appreciate that other forms of decoding can be provided such as program code decryption. Beginning with block 600, the DELI 100 is initiated and, as indicated in block 602, injected into the application 102 before it starts so as to gain control over its execution. With this control, the DELI 100 can intercept the various compressed application instructions that are ultimately to be executed, as indicated in block 604.

As in the mode of operation described in relation to FIG. 4, the DELI 100 monitors the execution of code so it can be determined which code fragments to cache. Accordingly, as described above, the DELI 100 can determine whether an associated code fragment has previously been decompressed and cached, as indicated in decision element 606. If so, the DELI 100 jumps to the code cache(s) 124 that contains the decompressed code and this code is executed by the hardware 104 in lieu of the original application code, as indicated in block 608. Again, execution of the cached code continues until a reference to code that has not been cached is encountered (610) at which time the DELI 100 jumps back to the application code and block 604.

With reference back to decision element 606, if no associated code fragment resides in the code cache(s) 124, flow continues to block 612 at which the instructions are decompressed *(i.e.,* decoded) by the DELI 100 so that the instructions can be evaluated. By way of example, this decompression can be provided by the decoding manager 130. Although this decompression *(i.e.,* decoding) is described as being performed by the decoding manager 130 of the DELI 100, persons having ordinary skill in the art will recognize that this function could, alternatively, be performed by another component such as a software component of a client application or a hardware component of the underlying computing system. Once the instructions are decompressed, the DELI 100 creates a copy of the instructions, as indicated in block 614, for example to one or more instruction buffers. Next, with reference to decision element 616, the DELI 100 determines whether the application instructions are hot with reference to a predetermined policy. If the instructions are not hot, flow continues to block 618 at which the copied, decompressed instructions are executed. If, however, the instructions are hot, the decompressed instructions are transformed as desired (620) and cached (622) in decompressed form so as to be available for execution the next time that particular functionality is required.

Such decompression and execution services can also be provided by the DELI 100 while operating in the nontransparent mode. For example, the application 102 *(i.e.,* client) or another component (not shown) can be configured to decompress the application code and invoke the DELI 100 to cache the decompressed code that is most frequently used. In such a scenario, flow is similar to that shown in FIG. 5 except that the code executed by the application 102 is previously compressed code.

Whether the decoding services are provided by the DELI 100 in the transparent or nontransparent mode, several advantages over prior solutions may be achieved both in terms of system performance and memory utilization. For example, where decompression/execution services are provided, an approximately 10% decompression penalty may be observed as compared with as much as a 50% penalty encountered with software solutions in which large portions of code must be decompressed. In terms of memory, in that most of the application code remains in compressed form, much less memory is needed during execution as compared to current software solutions.

While particular embodiments of the invention have been disclosed in detail in the foregoing description and drawings for purposes of example, it will be understood by those skilled in the art that variations and modifications thereof can be made without departing from the scope of the invention as set forth in the following claims. For instance, although the DELI has been described above as only providing decoding and executing services, it is to be noted that various other services can simultaneously be provided by the DELI. For instance, the decoding and executing services provided by the DELI can be utilized when performing other tasks including, for instance, hardware or software emulation that is facilitated by the client. The present disclosure is intended to include such applications.

The disclosures in United States patent application no. 10/212/275, from which this application claims priority, and in the abstract accompanying this application are incorporated herein by reference.

## Claims

1. A method of extending operating system functionality for an application (102), including the steps of:
receiving one or more binary instructions from an application (102);
determining whether the one or more binary instructions corresponds to a call to an operating system (104) to perform a particular operating system functionality;
determining whether the particular operating system functionality is to be modified for the application (102); and
if the particular operating system functionality is to be modified for the application (102), executing code to implement the modified functionality.

2. A method as in claim 1, wherein the step of determining whether the one or more binary instructions correspond to a call to an operating system (104) includes the step of intercepting a system call.

3. A method as in claim 1 or 2, wherein the step of receiving binary instructions corresponding to an application (102) includes receiving binary instructions via an application program interface (608).

4. A method as in claim 1, 2 or 3, wherein the step of receiving binary instructions corresponding to an application (102) includes the step of gaining control over execution of the binary instructions by injecting a dynamic execution layer interface (302) into the application (102).

5. A method as in any preceding claim, including the step of storing the code to implement the modified functionality in a code cache (306).

6. A method as in any preceding claim, including the steps of:
determining whether the code to implement the modified functionality is stored in a code cache (306); and
executing the code to implement the modified functionality from the code cache (306).

7. A system for extending operating system functionality for an application (102), the system including:
means for receiving binary instructions for an application (102);
means for identifying a call to an operating system (104) to perform a particular operating system functionality;
means for determining whether the particular operating system functionality is to be modified for the application (102); and
means for implementing the modified functionality.

8. A computer (800) configured to extend operating system functionality for an application (102), including:
an operating system (104) and at least one application (102) residing in a memory (804);
a system call interceptor functionality (304) configured:
to receive binary instructions from the application (102);
to determine whether the one or more binary instructions corresponds to a call to the operating system (104) to perform a particular operating system functionality; and
to determine whether the particular operating system functionality is to be modified for the application (102);
a core (606) configured to execute and cache code, the code being operable to implement the modified functionality; and
hardware (106) configured to process logic associated with the computer (800).

9. A computer (800) as in claim 8, including an application programming interface (608) configured to provide the application (102) access to the caching and executing functions of the core (606).

10. A computer as in claim 8 or 9, including a system control and configuration layer (612) configured to provide policies for operation of the core (606).
